# EUROPEAN PATENT SPECIFICATION

(11) **EP 3 702 176 B1**
(45) Date of publication and mention of the grant of the patent: **07.04.2021**
(21) Application number: 20159611.1
(22) Date of filing: 26.02.2020
(51) Int. Cl.: B60C 11/03, B60C 11/12

(54) **TIRE**
REIFEN
PNEUMATIQUE

(30) Priority: 28.02.2019 JP 2019036509; 13.12.2019 JP 2019225756
(43) Date of publication of application: 02.09.2020
(73) Proprietor: Sumitomo Rubber Industries, Ltd., Kobe-shi, Hyogo-ken 651-0072 (JP)
(72) Inventor: MATSUURA, Koji, Kobe-shi, Hyogo 651-0072 (JP)
(74) Representative: Manitz Finsterwald Patent- und Rechtsanwaltspartnerschaft mbB

(56) References cited:
- EP-A1- 1 372 988
- EP-A1- 1 614 549
- JP-A- H0 569 706
- JP-A- 2004 017 863
- JP-A- 2007 055 333
- JP-A- 2012 140 091
- JP-A- 2015 171 840
- JP-A- 2015 171 841

## Description

### BACKGROUND OF THE INVENTION

### Field of the Invention

The present invention relates to a tire.

### Description of the Background Art

The tire proposed in Japanese Laid-Open Patent Publication No. 2015-171872 includes: straight ribs that are disposed at the center side of a tread and that continuously extend in a straight manner in the tire circumferential direction; and middle blocks connected to the straight ribs. The middle blocks are demarcated by inclined lateral grooves. In the tire, falling of the middle blocks is inhibited by the straight ribs, whereby a decrease in the groove volumes of the inclined lateral grooves is prevented, and improvement of wet performance is further expected.

In the tire of Japanese Laid-Open Patent Publication No. 2015-171872, the stiffness of land portions outward of the middle blocks in the tire axial direction is insufficient, and steering stability, particularly, during cornering tends to be not sufficient. Therefore, further improvement in wet performance and steering stability is required for the tire of Japanese Laid-Open Patent Publication No. 2015-171872.
JP 2004 017863 A discloses a tire comprising the features according to the preamble of claim 1.

### SUMMARY OF THE INVENTION

The present invention has been made in view of the above-described problem, and a main object of the present invention is to provide a tire having improved wet performance and steering stability.
This object is satisfied by a tire comprising the features according to claim 1 or according to claim 9.

A first aspect of the present invention provides a tire including a tread portion, wherein: the tread portion is divided into five land portions by four main grooves continuously extending in a tire circumferential direction; the four main grooves include two shoulder main grooves provided between two tread edges, and two crown main grooves provided between the two shoulder main grooves; the five land portions include two shoulder land portions each demarcated between the tread edge and the shoulder main groove, two middle land portions each demarcated between the shoulder main groove and the crown main groove, and one crown land portion demarcated between the two crown main grooves; each of the middle land portions has a plurality of middle lateral grooves that extend from the shoulder main groove and that terminate within the middle land portion; each of the middle land portions is a semi-block row including a rib region continuously extending in the tire circumferential direction at an inner side in a tire axial direction with respect to the plurality of middle lateral grooves, and a block region divided by the plurality of middle lateral grooves; each of the shoulder land portions is a block row divided by a plurality of shoulder lateral grooves extending from the shoulder main groove to the tread edge; and a total area S1 of a tread surface of each of the shoulder land portions is larger than a total area S2 of a tread surface of the middle land portion adjacent thereto via the shoulder main groove.

The total area S1 is 14.0% to 17.0% of a total area St of a virtual tread surface obtained by filling all grooves and sipes provided on a tread surface of the tread portion.

Additionally or alternately, the total area S2 is 11.0% to 14.0% of a total area St of a virtual tread surface obtained by filling all grooves and sipes provided on a tread surface of the tread portion.

In the tire according to the present invention, preferably, the crown land portion is a rib continuously extending in the tire circumferential direction.

In the tire according to the present invention, preferably, a total area S3 of a tread surface of the crown land portion is 4.0% to 10.0% of a total area St of a virtual tread surface obtained by filling all grooves and sipes provided on a tread surface of the tread portion.

In the tire according to the present invention, preferably, the rib region has a plurality of sipes.

In the tire according to the present invention, preferably, a distance in the tire axial direction from a tire equator to a groove center line of each shoulder main groove is 0.25 to 0.31 times a tread width.

In the tire according to the present invention, preferably, each of the shoulder land portions has a shoulder short groove that extends from the tread edge and that terminates within the shoulder land portion.

In the tire according to the present invention, preferably, the tread portion has a designated rotational direction, and, in a transverse cross-section of each of the middle lateral grooves, a groove wall at a toe side in the rotational direction of the middle lateral groove includes a main body portion that extends in a tire radial direction from a bottom portion, and a chamfered portion that extends at a larger angle relative to the tire radial direction than the main body portion.

In the tire according to the present invention, preferably, in the transverse cross-section of each of the middle lateral grooves, a groove wall at a heel side in the rotational direction of the middle lateral groove extends from the bottom portion to a groove edge at a constant angle relative to the tire radial direction.

A second aspect of the present invention provides a tire including a tread portion, wherein: the tread portion is divided into six land portions by five main grooves continuously extending in a tire circumferential direction; the five main grooves include two shoulder main grooves provided between two tread edges, and three crown main grooves provided between the two shoulder main grooves; the six land portions include two shoulder land portions each demarcated between the tread edge and the shoulder main groove, two middle land portions each demarcated between the shoulder main groove and the crown main groove, and two crown land portions each demarcated between two crown main grooves; each of the middle land portions has a plurality of middle lateral grooves that extend from the shoulder main groove and that terminate within the middle land portion; each of the middle land portions is a semi-block row including a rib region continuously extending in the tire circumferential direction at an inner side in a tire axial direction with respect to the plurality of middle lateral grooves, and a block region divided by the plurality of middle lateral grooves; each of the shoulder land portions is a block row divided by a plurality of shoulder lateral grooves extending from the shoulder main groove to the tread edge; and a total area S1 of a tread surface of each of the shoulder land portions is larger than a total area S2 of a tread surface of the middle land portion adjacent thereto via the shoulder main groove.

In the second aspect of the present invention, preferably, a total area S4 of a tread surface of one of the crown land portions is not less than 3.0% of a total area St of a virtual tread surface obtained by filling all grooves and sipes provided on a tread surface of the tread portion.

Each middle land portion of the tire according to the present invention is a semi-block row including a rib region continuously extending in the tire circumferential direction at the inner side in the tire axial direction with respect to the plurality of middle lateral grooves, and a block region divided by the plurality of middle lateral grooves. In addition, each shoulder land portion is a block row divided by a plurality of shoulder lateral grooves extending from the shoulder main groove to the tread edge. The rib region has high stiffness and serves to enhance steering stability on a dry road surface. In addition, the middle lateral grooves and the shoulder lateral grooves discharge water pushed aside by the rib region, to the tread edge side during running on a wet road surface, and exhibit excellent wet performance.

In addition, in the tire according to the present invention, the total area S1 of the tread surface of each of the shoulder land portions is larger than the total area S2 of the tread surface of the middle land portion adjacent thereto via the shoulder main groove. Accordingly, the stiffness of the shoulder land portion is increased, so that steering stability during cornering is improved.

### BRIEF DESCRIPTION OF THE DRAWINGS

FIG. 1 is a development of a tread portion of a tire according to an embodiment of the present invention;
FIG. 2 is a transverse cross-sectional view of a crown main groove in FIG. 1;
FIG. 3 is an enlarged view of a middle land portion and a shoulder land portion in FIG. 1;
FIG. 4 is a cross-sectional view taken along a line A-A in FIG. 3;
FIG. 5 is an enlarged view of a crown land portion in FIG. 1;
FIG. 6 is a development of a tread portion of a tire according to a second embodiment of the present invention; and
FIG. 7 is a development of a tread portion of a tire of a comparative example.

### DESCRIPTION OF THE PREFERRED EMBODIMENTS

Hereinafter, an embodiment of the present invention will be described on the basis of the drawings.

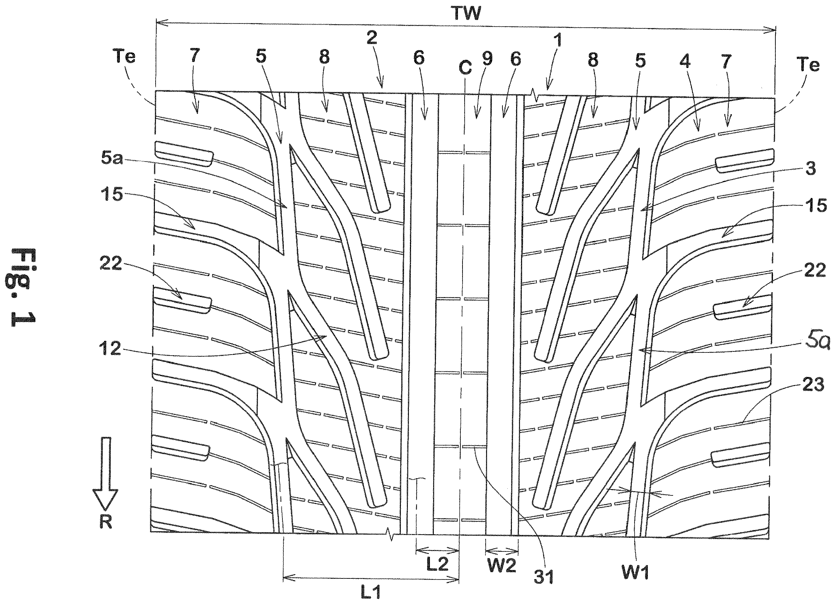

FIG. 1 shows a development of a tread portion 2 of a tire 1 according to the present embodiment. As shown in FIG. 1, the tire 1 of the present embodiment is used, for example, as a pneumatic tire for a passenger car. In a more preferable mode, the tire 1 of the present embodiment is suitably used as a rain tire for racing on a circuit. In addition, the tire 1 of the present embodiment has, for example, a tread width of 300 to 350 mm, an outer diameter of 700 to 730 mm, and a rim diameter of 17 to 19 inches and is used in so-called touring car races. The tire of the present invention is not limited to such a mode.

The tire 1 of the present embodiment has, for example, a designated rotational direction R. The rotational direction R is indicated, for example, on a sidewall portion (not shown) by characters or symbols.

The tread portion 2 is divided into five land portions 4 by four main grooves 3 continuously extending in the tire circumferential direction. In a preferable mode, the tread portion 2 of the present embodiment has a pattern that is in line symmetry with respect to a tire equator C. In addition, in a second embodiment of the present invention, the tread portion 2 is divided into six land portions 4 by five main grooves 3 continuously extending in the tire circumferential direction. A further specific configuration of the second embodiment of the present invention will be described later.

The four main grooves 3 include two shoulder main grooves 5 and two crown main grooves 6. The two shoulder main grooves 5 are provided between two tread edges Te. The two crown main grooves 6 are provided between the two shoulder main grooves 5.

In the case of a pneumatic tire for which a tire size, an internal pressure, and an applicable rim are specified in a standard, the tread edges Te are ground contact positions at the outermost side in the tire axial direction when a normal load is applied to the tire 1, in a normal state where the tire 1 is mounted to a normal rim and inflated to a normal internal pressure and no load is applied to the tire 1, such that the tire 1 is brought into contact with a flat surface at a camber angle of 0 degrees. Unless otherwise specified, dimensions and the like of components of the tire are values measured in the normal state.

The "normal rim" is a rim that is defined, in a standard system including a standard on which the tire is based, by the standard for each tire, and is, for example, the "standard rim" in the JATMA standard, the "Design Rim" in the TRA standard, or the "Measuring Rim" in the ETRTO standard.

The "normal internal pressure" is an air pressure that is defined, in a standard system including a standard on which the tire is based, by the standard for each tire, and is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" is a load that is defined, in a standard system including a standard on which the tire is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

For example, in the case of a tire for racing for which the above standard is not defined, the tread edges Te are defined, for example, as ground contact positions at the outermost side in the tire axial direction when a standard high load corresponding to the tire category is applied to the tire, in a standard use state, such that the tire is brought into contact with a flat surface at a camber angle of 0 degrees.

The "standard use state" refers to at least a state where the purpose of use of the tire can be achieved, and refers to, for example, a state where the tire is mounted to a rim recommended by the manufacturer and inflated to an internal pressure recommended by the manufacturer and no load is applied to the tire. In addition, the "standard high load" is a load assuming a vertical load acting on the front wheel tire at the outer side of cornering during sharp cornering, and is set, for example, to be 70 times the weight of the tire 1 (excluding the rim).

For a tire having a size corresponding to the above tire size, as in the tire 1 of the present embodiment, ground contact positions at the outermost side in the tire axial direction when the tire is inflated to an internal pressure of 200 kPa, the tire is brought into contact with a flat surface at a camber angle of 0 degrees, and a vertical load of 800 kg is applied to the tire, may be regarded as the tread edges Te.

Each of the shoulder main grooves 5 preferably extends, for example, in a zigzag manner. Each of the shoulder main grooves 5 of the present embodiment includes, for example, gently inclined portions 5a that are inclined at an angle of 5 to 15° relative to the tire circumferential direction. Each of the crown main grooves 6 preferably extends, for example, parallel to the tire circumferential direction in a straight manner.

The distance L1 in the tire axial direction from the tire equator C to a groove center line of the shoulder main groove 5 is, for example, 0.20 to 0.35 times and preferably 0.25 to 0.31 times a tread width TW. The distance L2 in the tire axial direction from the tire equator C to a groove center line of the crown main groove 6 is, for example, preferably 0.05 to 0.10 times the tread width TW. The tread width TW is the distance in the tire axial direction from one tread edge Te to the other tread edge Te in the normal state or the standard use state.

The groove width W1 of the shoulder main groove 5 is, for example, 2.5% to 4.5% of the tread width TW. The groove width W2 of the crown main groove 6 is, for example, 4.0% to 7.0% of the tread width TW. In the case of a tire for a passenger car, each of the groove depths of the shoulder main groove 5 and the crown main groove 6 is, for example, preferably 5 to 10 mm.

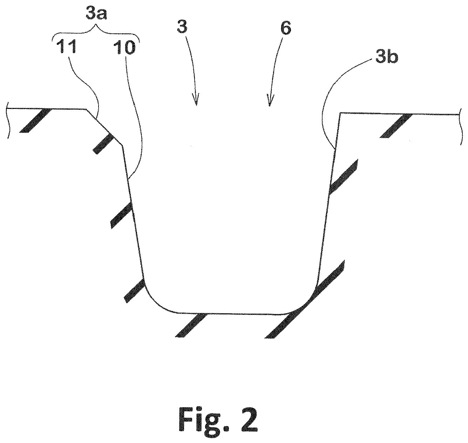

FIG. 2 shows a transverse cross-section of the crown main groove 6 as an example of a transverse cross-section of the main groove 3. As shown in FIG. 2, in the present embodiment, a groove wall 3a at the tread edge Te side of the main groove 3 includes a main body portion 10 that extends in the tire radial direction from a bottom portion, and a chamfered portion 11 that extends at a larger angle relative to the tire radial direction than the main body portion 10. In addition, a groove wall 3b at the tire equator C side of the main groove 3 extends from the bottom portion to the groove edge at a constant angle relative to the tire radial direction. Such a main groove 3 serves to exhibit excellent wet performance.

As shown in FIG. 1, the five land portions 4 include two shoulder land portions 7, two middle land portions 8, and one crown land portion 9. Each shoulder land portion 7 is demarcated between the tread edge Te and the shoulder main groove 5. Each middle land portion 8 is demarcated between the shoulder main groove 5 and the crown main groove 6. The crown land portion 9 is demarcated between the two crown main grooves 6.

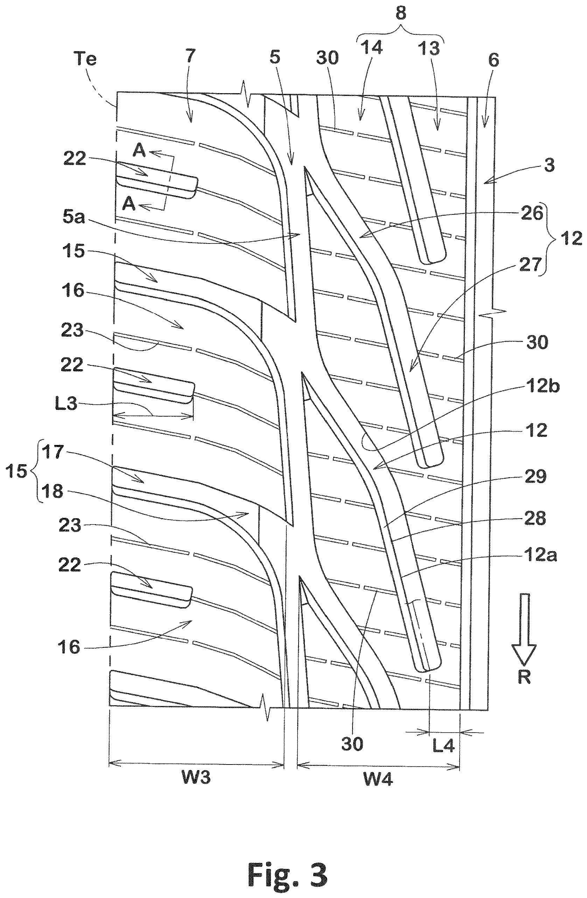

FIG. 3 shows an enlarged view of the middle land portion 8 and the shoulder land portion 7. As shown in FIG. 3, each middle land portion 8 has a plurality of middle lateral grooves 12. Each middle lateral groove 12 extends from the shoulder main groove 5 and terminates within the middle land portion 8. Accordingly, the middle land portion 8 is a semi-block row including: a rib region 13 that continuously extends in the tire circumferential direction at the inner side in the tire axial direction with respect to the plurality of middle lateral grooves 12; and a block region 14 divided by the plurality of middle lateral grooves 12. The rib region 13 continuously extending in the tire circumferential direction means a region that is not divided in the tire circumferential direction by a transverse groove having a width greater than 1.5 mm. Thus, a sipe having a width equal to or less than 1.5 mm may traverse the rib region 13.

Each of the shoulder land portions 7 has a plurality of shoulder lateral grooves 15. Each shoulder lateral groove 15 extends from the shoulder main groove 5 to the tread edge Te. The shoulder land portion 7 is a block row including a plurality of shoulder blocks 16 demarcated by the plurality of shoulder lateral grooves 15.

The rib region 13 has high stiffness and serves to enhance steering stability on a dry road surface. In addition, the middle lateral grooves 12 and the shoulder lateral grooves 15 discharge water pushed aside by the rib region 13, toward the tread edge side during running on a wet road surface, and exhibit excellent wet performance.

In the present invention, the total area S1 of the tread surface of the shoulder land portion 7 is larger than the total area S2 of the tread surface of the middle land portion 8 adjacent thereto via the shoulder main groove 5. Accordingly, the stiffness of the shoulder land portion 7 is increased, so that steering stability during cornering is improved.

The total area S1 of the tread surface the shoulder land portion 7 is 14.0% to 17.0% of the total area St of a virtual tread surface obtained by filling all the grooves and sipes provided on the tread surface of the tread portion 2. Such a shoulder land portion 7 can enhance steering stability and wet performance in a well-balanced manner.

Each shoulder lateral groove 15 extends, for example, from the shoulder main groove 5 so as to be inclined relative to the tire axial direction. Each shoulder lateral groove 15 of the present embodiment is inclined at the heel side in the rotational direction R from the shoulder main groove 5 toward the tread edge Te. The angle of the shoulder lateral groove 15 at the tread edge Te relative to the tire axial direction is, for example, 5 to 15°.

Of the groove edges of the shoulder lateral groove 15, the groove edge at the toe side in the rotational direction R includes a portion that extends in a smooth circular arc shape and that is connected to the groove edge of the shoulder main groove 5. Accordingly, the shoulder lateral groove 15 includes a constant width portion 17 that extends with a constant groove width, and a widening portion 18 that has a groove width gradually increasing toward the shoulder main groove 5 side. Such a shoulder lateral groove 15 effectively guides water within the shoulder main groove 5 to the tread edge Te side during running on a wet road surface, and can enhance wet performance.

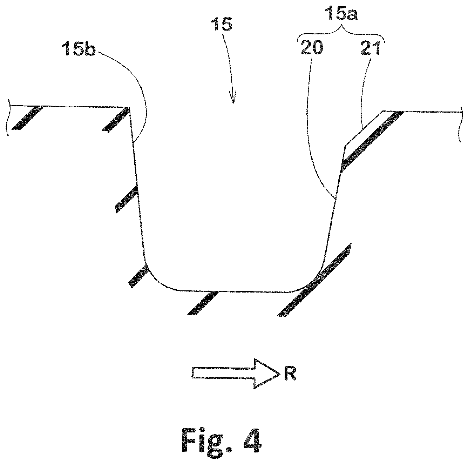

FIG. 4 shows a cross-sectional view of the shoulder lateral groove 15 taken along a line A-A. As shown in FIG. 4, a groove wall 15a at the toe side in the rotational direction R of the shoulder lateral groove 15 includes a main body portion 20 that extends in the tire radial direction from a bottom portion, and a chamfered portion 21 that extends at a larger angle relative to the tire radial direction than the main body portion 20. In addition, a groove wall 15b at the heel side in the rotational direction R of the shoulder lateral groove 15 extends from the bottom portion to the groove edge at a constant angle relative to the tire radial direction. At such a shoulder lateral groove 15, whereas the chamfered portion 21 inhibits uneven wear of the groove edge, the groove edge connected to the groove wall 15b at the heel side cuts a water film during running on a wet road surface and thus can effectively prevent a hydroplaning phenomenon.

As shown in FIG. 3, each shoulder block 16 has a shoulder short groove 22 and a plurality of shoulder sipes 23.

The shoulder short groove 22, for example, extends from the tread edge Te and terminates within the shoulder block 16. The shoulder short groove 22 is inclined in the same direction as the shoulder lateral groove 15. The shoulder short groove 22 of the present embodiment is provided at the same angle relative to the tire axial direction as the shoulder lateral groove 15.

The length L3 in the tire axial direction of the shoulder short groove 22 is, for example, 0.40 to 0.60 times the maximum width W3 in the tire axial direction of the shoulder land portion 7. Such a shoulder short groove 22 serves to enhance steering stability and wet performance in a well-balanced manner.

From the same viewpoint, the depth of the shoulder short groove 22 is preferably 0.70 to 0.90 times the depth of the shoulder main groove 5.

Each shoulder sipe 23 extends, for example, so as to be inclined in the same direction relative to the tire axial direction as the shoulder lateral groove 15. The angle of the shoulder sipe 23 relative to the tire axial direction is, for example, not greater than 45° and preferably 5 to 15°. The shoulder sipes 23 of the present embodiment include sipes that extend from the tread edge Te or the shoulder main groove 5 and that terminate within the shoulder land portion 7. In addition, in the present embodiment, the terminal ends of two shoulder sipes 23 are adjacent to each other with a gap of 1.0 to 3.0 mm therebetween. Moreover, one shoulder sipe 23 extends from the shoulder short groove 22 to the shoulder main groove 5. Such a shoulder sipe 23 can inhibit a hydroplaning phenomenon while maintaining steering stability during cornering.

The width of each shoulder sipe 23 is, for example, 0.5 to 1.0 mm. The depth of each shoulder sipe 23 is, for example, 0.05 to 0.15 times the depth of the shoulder main groove 5.

The total area S2 of the tread surface of the middle land portion 8 is 11.0% to 14.0% of the total area St of the virtual tread surface. In addition, the total area S2 of the tread surface of the middle land portion 8 is, for example, 0.60 to 0.97 times and more preferably 0.75 to 0.85 times the total area S1 of the tread surface of the shoulder land portion 7. Accordingly, the steering response during cornering becomes linear, so that excellent steering stability is achieved.

Each middle lateral groove 12 is inclined, for example, to the toe side in the rotational direction R from the shoulder main groove 5 toward the crown main groove 6 side. The angle of the middle lateral groove 12 relative to the tire circumferential direction is, for example, 10 to 40°. Such a middle lateral groove 12 guides water within this groove to the tread edge Te side with rotation of the tire during running on a wet road surface, and, further, effectively inhibits a hydroplaning phenomenon.

The middle lateral groove 12 includes, for example, a first portion 26 that extends from the shoulder main groove 5, and a second portion 27 that is connected to the first portion 26 and that extends at a smaller angle relative to the tire circumferential direction than the first portion 26. The angle of the first portion 26 relative to the tire circumferential direction is, for example, 20 to 40°. The angle of the second portion 27 relative to the tire circumferential direction is, for example, 5 to 20°. In a preferable mode, the second portion 27 is inclined at a larger angle relative to the tire circumferential direction than the gently inclined portion 5a of the shoulder main groove 5. Such a middle lateral groove 12 maintains the stiffness in the tire axial direction of the middle land portion 8, and improves steering stability during cornering.

The distance L4 in the tire axial direction from the end at the crown main groove 6 side of a groove center line of the middle lateral groove 12 to the groove edge of the crown main groove 6 is, for example, preferably 0.10 to 0.20 times the maximum width W4 in the tire axial direction of the middle land portion 8. Accordingly, the width of the rib region 13 is sufficiently ensured, so that excellent steering stability is exhibited.

The shape of a transverse cross-section of the middle lateral groove 12 is, for example, preferably substantially the same as the shape of a transverse cross-section of the shoulder lateral groove 15 described above. That is, in a transverse cross-section of the middle lateral groove 12, a groove wall 12a at the toe side in the rotational direction R of the middle lateral groove 12 includes a main body portion 28 that extends in the tire radial direction from a bottom portion, and a chamfered portion 29 that extends at a larger angle relative to the tire radial direction than the main body portion 28. In addition, a groove wall 12b at the heel side in the rotational direction R of the middle lateral groove 12 extends from the bottom portion to the groove edge at a constant angle relative to the tire radial direction. Such a middle lateral groove 12 can effectively inhibit a hydroplaning phenomenon.

The middle lateral groove 12 of the present embodiment is provided, for example, at a position at which the middle lateral groove 12 is smoothly connected to the shoulder lateral groove 15 via the shoulder main groove 5. Specifically, a region obtained by extending the first portion 26 of the middle lateral groove 12 in the longitudinal direction thereof overlaps the widening portion 18 of the shoulder lateral groove 15. Accordingly, the shoulder lateral groove 15 and the middle lateral groove 12 cooperate to exhibit high drainage performance.

The rib region 13 and the block region 14 of the middle land portion 8 have a plurality of middle sipes 30. Each middle sipe 30 is, for example, inclined in the same direction relative to the tire axial direction as the middle lateral groove 12. The angle of the middle sipe 30 relative to the tire axial direction is, for example, not greater than 45° and preferably 5 to 15°.

Each middle sipe 30 extends from the main groove 3 or the middle lateral groove 12 and terminates within the middle land portion 8. In the present embodiment, the terminal ends of two middle sipes 30 are adjacent to each other with a gap of 1.0 to 3.0 mm therebetween. Such arrangement of the middle sipes 30 can inhibit a hydroplaning phenomenon while maintaining steering stability during cornering.

The width of each middle sipe 30 is, for example, 0.5 to 1.0 mm. The depth of each middle sipe 30 is, for example, 0.05 to 0.15 times the depth of the shoulder main groove 5.

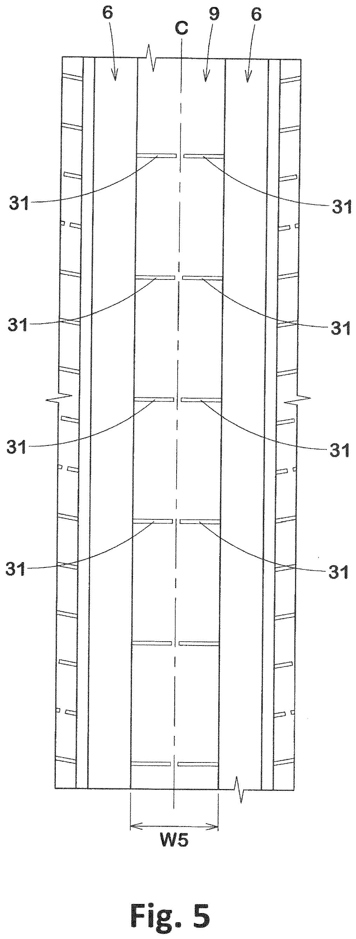

FIG. 5 shows an enlarged view of the crown land portion 9. As shown in FIG. 5, the crown land portion 9 is a rib continuously extending in the tire circumferential direction. Such a crown land portion 9 has high stiffness and serves to exhibit excellent steering stability.

The width W5 in the tire axial direction of the crown land portion 9 is, for example, preferably 0.05 to 0.15 times the tread width TW.

The total area S3 of the tread surface of the crown land portion 9 is preferably 4.0% to 10.0% of the total area St of the virtual tread surface. In addition, the total area S3 of the tread surface of the crown land portion 9 is preferably 0.60 to 0.80 times of the total area S2 of the tread surface of the middle land portion 8. Such a crown land portion 9 causes the steering response, particularly, at the start of cornering, to be linear and can enhance steering stability during straight running and at the beginning of cornering.

The crown land portion 9 has a plurality of crown sipes 31. Each crown sipe 31, for example, extends along the tire axial direction from the crown main groove 6 and terminates within the crown land portion 9. In the present embodiment, the terminal ends of two crown sipes 31 are adjacent to each other with a gap of 1.0 to 3.0 mm therebetween.

The width of each crown sipe 31 is, for example, 0.5 to 1.0 mm. The depth of each crown sipe 31 is, for example, preferably larger than the depth of the middle sipe 30 and the depth of the shoulder sipe 23. Specifically, the depth of each crown sipe 31 is preferably 0.40 to 0.60 times the depth of the shoulder main groove 5. Accordingly, steering stability and wet performance can be enhanced in a well-balanced manner during straight running and at the beginning of cornering.

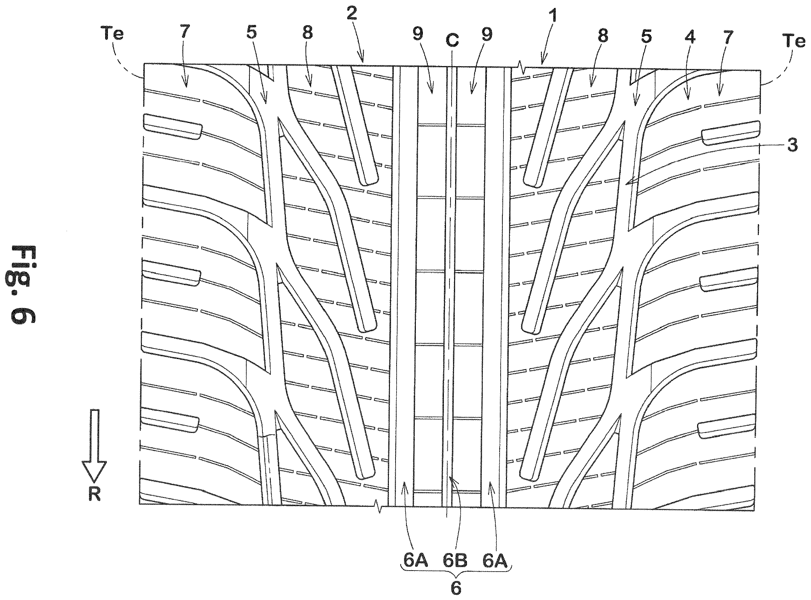

FIG. 6 shows a development of a tread portion 2 of a tire 1 according to the second embodiment of the present invention. In FIG. 6, elements that are common to the above-described embodiment are designated by the same reference characters, and the description thereof is omitted here. As shown in FIG. 6, in this embodiment, the tread portion 2 is divided into six land portions 4 by five main grooves 3 continuously extending in the tire circumferential direction. The five main grooves 3 include two shoulder main grooves 5 and three crown main grooves 6. The three crown main grooves 6 are provided between the two shoulder main grooves 5. The six land portions 4 include two shoulder land portions 7, two middle land portions 8, and two crown land portions 9.

The three crown main grooves 6 include two first crown main grooves 6A provided with the tire equator C therebetween, and a second crown main groove 6B provided between the two first crown main grooves 6A. The second crown main groove 6B of the present embodiment is, for example, located on the tire equator C.

The structure of the crown main groove 6 shown in FIG. 1 can be applied to each first crown main groove 6A. The groove width and the groove depth of the second crown main groove 6B are, for example, smaller than the groove width and the groove depth of the first crown main groove 6A. The groove width of the second crown main groove 6B is, for example, 30% to 50% of the groove width of the first crown main groove 6A. Similarly, the groove depth of the second crown main groove 6B is, for example, 30% to 50% of the groove depth of the first crown main groove 6A.

Each of the two crown land portions 9 is demarcated between the first crown main groove 6A and the second crown main groove 6B. The two crown land portions 9 are preferably formed in shapes that are in line symmetry with each other with respect to the tire equator C. The total area S4 of the tread surface of one crown land portion 9 is not less than 3.0% and preferably 3.0% to 5.0% of the total area St of the virtual tread surface. Such a crown land portion 9 serves to enhance steering stability and wet performance in a well-balanced manner. In the present embodiment, a value obtained by doubling the total area S4 of the tread surface of one crown land portion 9 is the total area S3 of the tread surface of the entire crown land portion 9.

### EXAMPLES

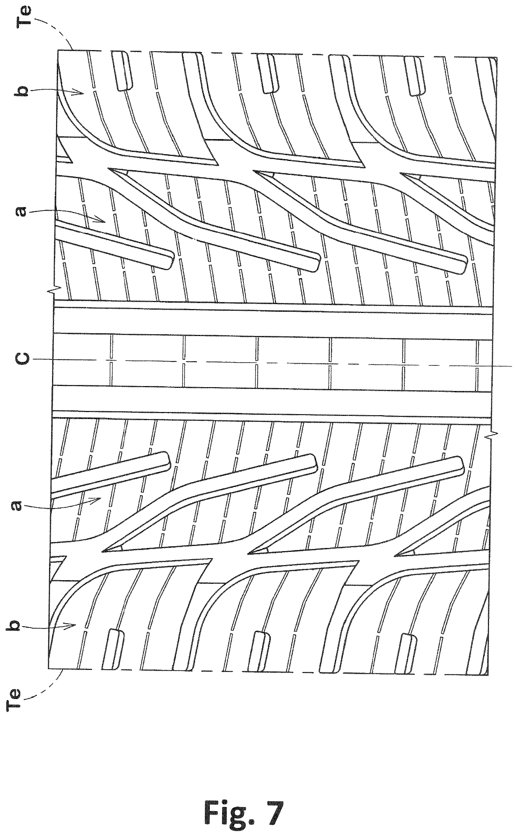

Tires having the basic pattern in FIG. 1 were produced as test tires on the basis of specifications in Table 1. Regarding the size of each tire, the tread width is 310 mm, the outer diameter is 710 mm, and the rim diameter is 18 inches. As a comparative example, a tire, in which the total area S2 of the tread surface of each middle land portion a is larger than the total area S1 of the tread surface of each shoulder land portion b as shown in FIG. 7, was produced as a test tire. The tire of the comparative example has the same structure as that of each of the tires of the examples, except for the above structure. Each test tire was tested for steering stability and wet performance. The common specifications and the test methods for the respective test tires are as follows.
Mount rim: 18×13.0J
Tire internal pressure: 180 kPa
Test vehicle: a rear-wheel-drive car having an engine displacement of 3400 cc
Tire mounted position: all wheels

### <Steering Stability>

Sensory evaluation was made by a driver for steering stability when the driver drove the above test vehicle on a dry road surface. The results are indicated as scores with the score of the comparative example being regarded as 100. A higher value indicates that the steering stability is better.

### <Wet Performance>

The above test vehicle was driven on an asphalt road surface having a radius of 100 m and provided with a puddle having a depth of 5 mm and a length of 20 m, and the lateral acceleration (lateral G) of the front wheels was measured. The results are averages of the lateral G at speeds of 50 to 80 km/h, and are indicated as indexes with the value of the comparative example being regarded as 100. A higher value indicates that the wet performance is better.

The results of the tests are shown in Tables 1 and 2.

**[Table 1]**

| | Comparative example | Example 1 | Example 2 | Example 3 | Example 4 | Example 5 |
|---|---|---|---|---|---|---|
| Drawing showing tread pattern | FIG. 7 | FIG. 1 | FIG. 1 | FIG. 1 | FIG. 1 | FIG. 1 |
| Total area S1 of tread surface of shoulder land portion / total area St of virtual tread surface (%) | 12.5 | 15.5 | 14.0 | 14.5 | 16.5 | 17.0 |
| Total area S2 of tread surface of middle land portion / total area St of virtual tread surface (%) | 15.5 | 12.5 | 14.0 | 13.5 | 11.5 | 11.0 |
| Total area S3 of tread surface of crown land portion / total area St of virtual tread surface (%) | 7.0 | 7.0 | 7.0 | 7.0 | 7.0 | 7.0 |
| Steering stability (score) | 100 | 106 | 102 | 104 | 106 | 106 |
| Wet performance (index) | 100 | 103 | 104 | 103 | 102 | 101 |

**[Table 2]**

| | Example 6 | Example 7 | Example 8 | Example 9 | Example 10 |
|---|---|---|---|---|---|
| Drawing showing tread pattern | FIG. 1 | FIG. 1 | FIG. 1 | FIG. 6 | FIG. 6 |
| Total area S1 of tread surface of shoulder land portion / total area St of virtual tread surface (%) | 17.0 | 15.5 | 13.5 | 15.5 | 15.5 |
| Total area S2 of tread surface of middle land portion / total area St of virtual tread surface (%) | 14.0 | 12.5 | 11.5 | 12.5 | 12.5 |
| Total area S3 of tread surface of crown land portion / total area St of virtual tread surface (%) | 4.0 | 5.0 | 10.0 | 7.0 | 5.0 |
| Steering stability (score) | 104 | 102 | 106 | 105 | 98 |
| Wet performance (index) | 104 | 104 | 102 | 104 | 105 |

As a result of the tests, it was confirmed that the tires of the examples exhibit excellent steering stability and wet performance.

## Claims

1. A tire (1) comprising a tread portion (2), wherein
the tread portion (2) is divided into five land portions (4) by four main grooves (3) continuously extending in a tire circumferential direction,
the four main grooves (3) include two shoulder main grooves (5) provided between two tread edges (Te), and two crown main grooves (6) provided between the two shoulder main grooves (5),
the five land portions (4) include two shoulder land portions (7) each demarcated between the tread edge (Te) and the shoulder main groove (5), two middle land portions (8) each demarcated between the shoulder main groove (5) and the crown main groove (6), and one crown land portion (9) demarcated between the two crown main grooves (6),
each of the middle land portions (8) has a plurality of middle lateral grooves (12) that extend from the shoulder main groove (5) and that terminate within the middle land portion (8),
each of the middle land portions (8) is a semi-block row including a rib region (13) continuously extending in the tire circumferential direction at an inner side in a tire axial direction with respect to the plurality of middle lateral grooves (12), and a block region (14) divided by the plurality of middle lateral grooves (12),
each of the shoulder land portions (7) is a block row divided by a plurality of shoulder lateral grooves (15) extending from the shoulder main groove (5) to the tread edge (Te), and
a total area of a tread surface of each of the shoulder land portions (7) is larger than a total area of a tread surface of the middle land portion (8) adjacent thereto via the shoulder main groove (5),
**characterized in that**
the total area of the tread surface of each of the shoulder land portions (7) is 14.0% to 17.0% of a total area of a virtual tread surface obtained by filling all grooves and sipes provided on a tread surface of the tread portion (2), and/or
the total area of the tread surface of the middle land portion (8) is 11.0% to 14.0% of a total area of a virtual tread surface obtained by filling all grooves and sipes provided on a tread surface of the tread portion (2).

2. The tire (1) according to claim 1, wherein the crown land portion (9) is a rib continuously extending in the tire circumferential direction.

3. The tire (1) according to claim 1 or 2, wherein a total area of a tread surface of the crown land portion (9) is 4.0% to 10.0% of the total area of the virtual tread surface obtained by filling all grooves and sipes provided on the tread surface of the tread portion (2).

4. The tire (1) according to any one of claims 1 to 3, wherein the rib region (13) has a plurality of sipes (30).

5. The tire (1) according to any one of claims 1 to 4, wherein a distance (L1) in the tire axial direction from a tire equator (C) to a groove center line of each shoulder main groove (5) is 0.25 to 0.31 times a tread width (TW).

6. The tire (1) according to any one of claims 1 to 5, wherein each of the shoulder land portions (7) has a shoulder short groove (22) that extends from the tread edge (Te) and that terminates within the shoulder land portion (7).

7. The tire (1) according to any one of claims 1 to 6, wherein
the tread portion (2) has a designated rotational direction (R), and
in a transverse cross-section of each of the middle lateral grooves (12), a groove wall (12a) at a toe side in the rotational direction (R) of the middle lateral groove (12) includes a main body portion (28) that extends in a tire radial direction from a bottom portion, and a chamfered portion (29) that extends at a larger angle relative to the tire radial direction than the main body portion (28).

8. The tire (1) according to claim 7, wherein, in the transverse cross-section of each of the middle lateral grooves (12), a groove wall (12b) at a heel side in the rotational direction (R) of the middle lateral groove (12) extends from the bottom portion to a groove edge at a constant angle relative to the tire radial direction.

9. A tire (1) comprising a tread portion (2), wherein
the tread portion (2) is divided into six land portions (4) by five main grooves (3) continuously extending in a tire circumferential direction,
the five main grooves (3) include two shoulder main grooves (5) provided between two tread edges (Te), and three crown main grooves (6, 6A, 6B) provided between the two shoulder main grooves (5),
the three crown main grooves (6, 6A, 6B) include two first crown main grooves (6A) provided with the tire equator C therebetween, and a second crown main groove (6B) provided between the two first crown main grooves (6A),
the six land portions (4) include two shoulder land portions (7) each demarcated between the tread edge (Te) and the shoulder main groove (5), two middle land portions (8) each demarcated between the shoulder main groove (5) and the crown main groove (6, 6A), and two crown land portions (9) each demarcated between one of the two first crown main grooves (6A) and the second crown main groove (6B),
each of the middle land portions (8) has a plurality of middle lateral grooves (12) that extend from the shoulder main groove (5) and that terminate within the middle land portion (8),
each of the middle land portions (8) is a semi-block row including a rib region (13) continuously extending in the tire circumferential direction at an inner side in a tire axial direction with respect to the plurality of middle lateral grooves (12), and a block region (14) divided by the plurality of middle lateral grooves (12),
each of the shoulder land portions (7) is a block row divided by a plurality of shoulder lateral grooves (15) extending from the shoulder main groove (5) to the tread edge (Te), and
a total area of a tread surface of each of the shoulder land portions (7) is larger than a total area of a tread surface of the middle land portion (8) adjacent thereto via the shoulder main groove (5),
**characterized in that**
the total area of the tread surface of each of the shoulder land portions (7) is 14.0% to 17.0% of a total area of a virtual tread surface obtained by filling all grooves and sipes provided on a tread surface of the tread portion (2), and/or
the total area of the tread surface of the middle land portion (8) is 11.0% to 14.0% of a total area of a virtual tread surface obtained by filling all grooves and sipes provided on a tread surface of the tread portion (2).

10. The tire (1) according to claim 9, wherein a total area of a tread surface of one of the crown land portions (9) is not less than 3.0% of the total area of the virtual tread surface obtained by filling all grooves and sipes provided on the tread surface of the tread portion (2).

## Patentansprüche

1. Reifen (1), der einen Laufflächenabschnitt (2) umfasst, wobei
der Laufflächenabschnitt (2) durch vier Hauptrillen (3), die sich kontinuierlich in einer Reifenumfangsrichtung erstrecken, in fünf Landabschnitte (4) geteilt ist,
die vier Hauptrillen (3) zwei Schulterhauptrillen (5), die zwischen zwei Laufflächenrändern (Te) vorgesehen sind, und zwei Kronenhauptrillen (6) umfassen, die zwischen den zwei Schulterhauptrillen (5) vorgesehen sind,
die fünf Landabschnitte (4) zwei Schulterlandabschnitte (7), die jeweils zwischen dem Laufflächenrand (Te) und der Schulterhauptrille (5) eingegrenzt sind, zwei Mittellandabschnitte (8), die jeweils zwischen der Schulterhauptrille (5) und der Kronenhauptrille (6) eingegrenzt sind, und einen Kronenlandabschnitt (9) umfassen, der zwischen den zwei Kronenhauptrillen (6) eingegrenzt ist,
jeder der Mittellandabschnitte (8) mehrere Mittelquerrillen (12) aufweist, die sich von der Schulterhauptrille (5) erstrecken und die innerhalb des Mittellandabschnitts (8) enden,
jeder der Mittellandabschnitte (8) eine Semiblockreihe ist, die einen Rippenbereich (13), der sich kontinuierlich in der Reifenumfangsrichtung auf einer Innenseite in einer Reifenaxialrichtung bezogen auf die mehreren Mittelquerrillen (12) erstreckt, und einen Blockbereich (14) umfasst, der durch die mehreren Mittelquerrillen (12) geteilt ist,
jeder der Schulterlandabschnitte (7) eine Blockreihe ist, die durch mehrere Schulterquerrillen (15) geteilt ist, die sich von der Schulterhauptrille (5) bis zu dem Laufflächenrand (Te) erstrecken, und
ein gesamter Flächeninhalt einer Lauffläche jedes der Schulterlandabschnitte (7) größer als ein gesamter Flächeninhalt einer Lauffläche des Mittellandabschnitts (8) ist, der zu diesen über die Schulterhauptrille (5) benachbart ist,
**dadurch gekennzeichnet, dass**
der gesamte Flächeninhalt der Lauffläche jedes der Schulterlandabschnitte (7) 14,0 % bis 17,0 % eines gesamten Flächeninhalts einer virtuellen Lauffläche ist, die erhalten wird, indem alle Rillen und Feinschnitte, die an einer Lauffläche des Laufflächenabschnitts (2) vorgesehen sind, gefüllt werden, und/oder
der gesamte Flächeninhalt der Lauffläche des Mittellandabschnitts (8) 11,0 % bis 14,0 % eines gesamten Flächeninhalts einer virtuellen Lauffläche ist, die erhalten wird, indem alle Rillen und Feinschnitte, die an einer Lauffläche des Laufflächenabschnitts (2) vorgesehen sind, gefüllt werden.

2. Reifen (1) nach Anspruch 1, wobei der Kronenlandabschnitt (9) eine Rippe ist, die sich kontinuierlich in der Reifenumfangsrichtung erstreckt.

3. Reifen (1) nach Anspruch 1 oder 2, wobei ein gesamter Flächeninhalt einer Lauffläche des Kronenlandabschnitts (9) 4,0 % bis 10,0 % des gesamten Flächeninhalts der virtuellen Lauffläche ist, die erhalten wird, indem alle Rillen und Feinschnitte, die an der Lauffläche des Laufflächenabschnitts (2) vorgesehen sind, gefüllt werden.

4. Reifen (1) nach einem der Ansprüche 1 bis 3, wobei der Rippenbereich (13) mehrere Feinschnitte (30) aufweist.

5. Reifen (1) nach einem der Ansprüche 1 bis 4, wobei eine Distanz (L1) in der Reifenaxialrichtung von einem Reifenäquator (C) bis zu einer Rillenmittellinie jeder Schulterhauptrille (5) das 0,25- bis 0,31-fache einer Laufflächenbreite (TW) ist.

6. Reifen (1) nach einem der Ansprüche 1 bis 5, wobei jeder der Schulterlandabschnitte (7) eine kurze Schulterrille (22) aufweist, die sich von dem Laufflächenrand (Te) erstreckt und innerhalb des Schulterlandabschnitts (7) endet.

7. Reifen (1) nach einem der Ansprüche 1 bis 6, wobei
der Laufflächenabschnitt (2) eine festgelegte Drehrichtung (R) aufweist und in einem quer verlaufenden Querschnitt jeder der Mittelquerrillen (12) eine Rillenwand (12a) auf einer Spitzenseite der Mittelquerrille (12) in der Drehrichtung (R) einen Hauptkörperabschnitt (28), der sich in einer Reifenradialrichtung von einem Bodenabschnitt erstreckt, und einen abgeschrägten Abschnitt (29) aufweist, der sich relativ zu der Reifenradialrichtung unter einem größeren Winkel als der Hauptkörperabschnitt (28) erstreckt.

8. Reifen (1) nach Anspruch 7, wobei
in dem quer verlaufenden Querschnitt jeder der Mittelquerrillen (12) sich eine Rillenwand (12b) auf einer Absatzseite der Mittelquerrille (12) in der Drehrichtung (R) von dem Bodenabschnitt bis zu einem Rillenrand relativ zu der Reifenradialrichtung unter einem konstanten Winkel erstreckt.

9. Reifen (1), der einen Laufflächenabschnitt (2) umfasst, wobei
der Laufflächenabschnitt (2) durch fünf Hauptrillen (3), die sich kontinuierlich in einer Reifenumfangsrichtung erstrecken, in sechs Landabschnitte (4) geteilt ist,
die fünf Hauptrillen (3) zwei Schulterhauptrillen (5), die zwischen zwei Laufflächenrändern (Te) vorgesehen sind, und drei Kronenhauptrillen (6, 6A, 6B) umfassen, die zwischen den zwei Schulterhauptrillen (5) vorgesehen sind,
die drei Kronenhauptrillen (6, 6A, 6B) zwei erste Kronenhauptrillen (6A), die mit dem Reifenäquator (C) zwischen diesen vorgesehen sind, und eine zweite Kronenhauptrille (6B) umfassen, die zwischen den zwei ersten Kronenhauptrillen (6A) vorgesehen ist,
die sechs Landabschnitte (4) zwei Schulterlandabschnitte (7), die jeweils zwischen dem Laufflächenrand (Te) und der Schulterhauptrille (5) eingegrenzt sind, zwei Mittellandabschnitte (8), die jeweils zwischen der Schulterhauptrille (5) und der Kronenhauptrille (6, 6A) eingegrenzt sind, und zwei Kronenlandabschnitte (9) umfassen, die jeweils zwischen einer der zwei ersten Kronenhauptrillen (6A) und der zweiten Kronenhauptrille (6B) eingegrenzt sind,
jeder der Mittellandabschnitte (8) mehrere Mittelquerrillen (12) aufweist, die sich von der Schulterhauptrille (5) erstrecken und die innerhalb des Mittellandabschnitts (8) enden,
jeder der Mittellandabschnitte (8) eine Semiblockreihe ist, die einen Rippenbereich (13), der sich kontinuierlich in der Reifenumfangsrichtung auf einer Innenseite in einer Reifenaxialrichtung bezogen auf die mehreren Mittelquerrillen (12) erstreckt, und einen Blockbereich (14) umfasst, der durch die mehreren Mittelquerrillen (12) geteilt ist,
jeder der Schulterlandabschnitte (7) eine Blockreihe ist, die durch mehrere Schulterquerrillen (15) geteilt ist, die sich von der Schulterhauptrille (5) bis zu dem Laufflächenrand (Te) erstrecken, und
ein gesamter Flächeninhalt einer Lauffläche jedes der Schulterlandabschnitte (7) größer als ein gesamter Flächeninhalt einer Lauffläche des Mittellandabschnitts (8) ist, der zu diesen über die Schulterhauptrille (5) benachbart ist,
**dadurch gekennzeichnet, dass**
der gesamte Flächeninhalt der Lauffläche jedes der Schulterlandabschnitte (7) 14,0 % bis 17,0 % eines gesamten Flächeninhalts einer virtuellen Lauffläche ist, die erhalten wird, indem alle Rillen und Feinschnitte, die an einer Lauffläche des Laufflächenabschnitts (2) vorgesehen sind, gefüllt werden, und/oder
der gesamte Flächeninhalt der Lauffläche des Mittellandabschnitts (8) 11,0 % bis 14,0 % eines gesamten Flächeninhalts einer virtuellen Lauffläche ist, die erhalten wird, indem alle Rillen und Feinschnitte, die an einer Lauffläche des Laufflächenabschnitts (2) vorgesehen sind, gefüllt werden.

10. Reifen (1) nach Anspruch 9, wobei ein gesamter Flächeninhalt einer Lauffläche eines der Kronenlandabschnitte (9) nicht kleiner als 3,0 % des gesamten Flächeninhalts der virtuellen Lauffläche ist, die erhalten wird, indem alle Rillen und Feinschnitte, die an der Lauffläche des Laufflächenabschnitts (2) vorgesehen sind, gefüllt werden.

## Revendications

1. Pneumatique (1) comprenant une portion formant bande de roulement (2), dans lequel
la portion formant bande de roulement (2) est divisée en cinq portions en relief (4) par quatre rainures principales (3) s'étendant en continu dans une direction circonférentielle du pneumatique,
les quatre rainures principales (3) incluent deux rainures principales d'épaulement (5) prévues entre deux bords de bande de roulement (Te), et deux rainures principales de couronne (6) prévues entre les deux rainures principales d'épaulement (5),
les cinq portions en relief (4) incluent deux portions en relief d'épaulement (7) délimitées chacune entre le bord de bande de roulement (Te) et la rainure principale d'épaulement (5), deux portions en relief médianes (8) délimitées chacune entre la rainure principale d'épaulement (5) et la rainure principale de couronne (6), et une portion en relief de couronne (9) délimitée entre les deux rainures principales de couronne (6),
chacune des portions en relief médianes (8) a une pluralité de rainures latérales médianes (12) qui s'étendent depuis la rainure principale d'épaulement (5) et qui se terminent à l'intérieur de la portion en relief médiane (8),
chacune des portions en relief médianes (8) est une rangée de demi-blocs incluant une région de nervure (13) s'étendant en continu dans la direction circonférentielle du pneumatique au niveau d'un côté intérieur dans une direction axiale du pneumatique par rapport à la pluralité de rainures latérales médianes (12), et une région de blocs (14) divisée par la pluralité de rainures latérales médianes (12),
chacune des portions en relief d'épaulement (7) est une rangée de blocs divisée par une pluralité de rainures latérales d'épaulement (15) s'étendant depuis la rainure principale d'épaulement (5) jusqu'au bord de bande de roulement (Te), et
une aire totale d'une surface de bande de roulement de chacune des portions en relief d'épaulement (7) est plus grande qu'une aire totale d'une surface de bande de roulement de la portion en relief médiane (8) adjacente à celle-ci via la rainure principale d'épaulement (5),
**caractérisé en ce que**
l'aire totale de la surface de bande de roulement de chacune des portions en relief d'épaulement (7) est de 14,0 % à 17,0 % d'une aire totale d'une surface de bande de roulement virtuelle obtenue en remplissant l'ensemble des rainures et fentes prévues sur une surface de bande de roulement de la portion formant bande de roulement (2), et/ou
l'aire totale de la surface de bande de roulement de la portion en relief médiane (8) est de 11,0 % à 14,0 % d'une aire totale d'une surface de bande de roulement virtuelle obtenue en remplissant l'ensemble des rainures et fentes prévues sur une surface de bande de roulement de la portion formant bande de roulement (2).

2. Pneumatique (1) selon la revendication 1, dans lequel la portion en relief de couronne (9) est une nervure s'étendant en continu dans la direction circonférentielle du pneumatique.

3. Pneumatique (1) selon la revendication 1 ou 2, dans lequel une aire totale d'une surface de bande de roulement de la portion en relief de couronne (9) est de 4,0 % à 10,0 % de l'aire total de la surface de bande de roulement virtuelle obtenue en remplissant l'ensemble des rainures et fentes prévues sur la surface de bande de roulement de la portion formant bande de roulement (2).

4. Pneumatique (1) selon l'une quelconque des revendications 1 à 3, dans lequel la région de nervure (13) a une pluralité de fentes (30).

5. Pneumatique (1) selon l'une quelconque des revendications 1 à 4, dans lequel une distance (L1) dans la direction axiale du pneumatique depuis un équateur de pneumatique (C) jusqu'à une ligne centrale de rainure de chaque rainure principale d'épaulement (5) est 0,25 à 0,31 fois une largeur de bande de roulement (TW).

6. Pneumatique (1) selon l'une quelconque des revendications 1 à 5, dans lequel chacune des portions en relief d'épaulement (7) a une rainure courte d'épaulement (22) qui s'étend depuis le bord de bande de roulement (Te) et qui se termine à l'intérieur de la portion en relief d'épaulement (7).

7. Pneumatique (1) selon l'une quelconque des revendications 1 à 6, dans lequel la portion formant bande de roulement (2) a une direction de rotation par conception (R) et, dans une direction de coupe transversale de chacune des rainures latérales médianes (12), une paroi de rainure (12a) au niveau d'un côté pointe dans la direction de rotation (R) de la rainure latérale médiane (12) inclut une portion formant corps principal (28) qui s'étend dans une direction radiale du pneumatique depuis une portion de fond, et une portion chanfreinée (29) qui s'étend sous un angle plus grand, relativement à la direction radiale du pneumatique, que la portion formant corps principal (28).

8. Pneumatique (1) selon la revendication 7, dans lequel, dans une section de coupe transversale de chacune des rainures latérales médianes (12), une paroi de rainure (12b) au niveau d'un côté talon dans la direction de rotation (R) de la rainure latérale médiane (12) s'étend depuis la portion de fond jusqu'à un bord de rainure sous un angle constant relativement à la direction radiale du pneumatique.

9. Pneumatique (1) comprenant une portion formant bande de roulement (2), dans lequel
la portion formant bande de roulement (2) est divisée en six portions en relief (4) par cinq rainures principales (3) s'étendant en continu dans une direction circonférentielle du pneumatique,
les cinq rainures principales (3) incluent deux rainures principales d'épaulement (5) prévues entre deux bords de bande de roulement (Te), et trois rainures principales de couronne (6, 6A, 6B) prévues entre les deux rainures principales d'épaulement (5),
les trois rainures principales de couronne (6, 6A, 6B) incluent deux premières rainures principales de couronne (6A) prévues avec l'équateur de pneumatique C entre celles-ci, et une seconde rainure principale de couronne (6B) prévue entre les deux premières rainures principales de couronne (6A),
les six portions en relief (4) incluent deux portions en relief d'épaulement (7) délimitées chacune entre le bord de bande de roulement (Te) et la rainure principale d'épaulement (5), deux portions en relief médianes (8) délimitées chacune entre la rainure principale d'épaulement (5) et la rainure principale de couronne (6, 6A), et deux portions en relief de couronne (9) délimitées chacune entre l'une des deux premières rainures principales de couronne (6A) et la seconde rainure principale de couronne (6B),
chacune des portions en relief médianes (8) a une pluralité de rainures latérales médianes (12) qui s'étendent depuis la rainure principale d'épaulement (5) et qui se terminent à l'intérieur de la portion en relief médiane (8),
chacune des portions en relief médianes (8) est une rangée de demi-blocs incluant une région de nervure (13) s'étendant en continu dans la direction circonférentielle du pneumatique au niveau d'un côté intérieur dans une direction axiale du pneumatique par rapport à la pluralité de rainures latérales médianes (12), et une région de blocs (14) divisée par la pluralité de rainures latérales médianes (12),
chacune des portions en relief d'épaulement (7) est une rangée de blocs divisée par une pluralité de rainures latérales d'épaulement (15) s'étendant depuis la rainure principale d'épaulement (5) jusqu'au bord de bande de roulement (Te), et
une aire totale d'une surface de bande de roulement de chacune des portions en relief d'épaulement (7) est plus grande qu'une aire totale d'une surface de bande de roulement de la portion en relief médiane (8) adjacente à celle-ci via la rainure principale d'épaulement (5),
**caractérisé en ce que**
l'aire totale de la surface de bande de roulement de chacune des portions en relief d'épaulement (7) est de 14,0 % à 17,0 % d'une aire totale d'une surface de bande de roulement virtuelle obtenue en remplissant l'ensemble des rainures et fentes prévues sur une surface de bande de roulement de la portion formant bande de roulement (2), et/ou
l'aire totale de la surface de bande de roulement de la portion en relief médiane (8) est de 11,0 % à 14,0 % d'une aire totale d'une surface de bande de roulement virtuelle obtenue en remplissant l'ensemble des rainures et fentes prévues sur une surface de bande de roulement de la portion formant bande de roulement (2).

10. Pneumatique (1) selon la revendication 9, dans lequel une aire totale d'une surface de bande de roulement de l'une des portions en relief de couronne (9) n'est pas inférieure à 3,0 % de l'aire totale de la surface de bande de roulement virtuelle obtenue en remplissant l'ensemble des rainures et fentes prévues sur la surface de bande de roulement de la portion formant bande de roulement (2).
